# EUROPEAN PATENT APPLICATION

(11) **EP 4 808 013 A1**
(43) Date of publication of application: **16.09.2026**
(21) Application number: 23958048.3
(22) Date of filing: 10.11.2023
(51) Int. Cl.: H04B 7/145

(54) **COMMUNICATION METHOD, APPARATUS, AND DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: LIU, Zhe, Dongguan, Guangdong 523860 (CN); CAO, Jianfei, Dongguan, Guangdong 523860 (CN)
(74) Representative: Taor, Simon Edward William
(86) International application number: PCT/CN2023/131094
(87) International publication number: WO 2025/097445

(57) **Abstract**

A communication method, apparatus, and device, and a storage medium are provided, which relate to the field of mobile communication technology. The method is performed by a first device, and the method includes the following. First information is received (510), where the first information indicates one or more second devices, and the one or more second devices are reconfigurable intelligent surface (RIS) devices. Communication with a third device is performed via the one or more second devices (520).

## Description

### TECHNICAL FIELD

This disclosure relates to the field of mobile communication technology, in particular to a communication method, apparatus, and device, and a storage medium.

### BACKGROUND

A reconfigurable intelligent surface (RIS) is a technology that can passively reflect incident wireless signals via a signal reflective element.

In the related art, through RIS technology, a coverage range of wireless signals can be expanded, thereby improving performance of a wireless communication system.

### SUMMARY

A communication method, apparatus, and device, and a storage medium are provided in embodiments of the present disclosure. The technical solutions are as follows.

In an aspect, a communication method is provided in embodiments of the present disclosure. The method is performed by a first device, and the method includes the following. First information is received, where the first information indicates one or more second devices, and the one or more second devices are reconfigurable intelligent surface (RIS) devices. Communication with a third device is performed via the one or more second devices.

In an aspect, a communication method is provided in embodiments of the present disclosure. The method is performed by a second device, and the method includes the following. First information is sent to a first device, where the first information indicates one or more second devices, and the one or more second devices are RIS devices. Communication with the first device is performed via the one or more second devices.

In another aspect, a communication apparatus is provided in embodiments of the present disclosure. The apparatus includes a receiving module and a communication module. The receiving module is configured to receive first information, where the first information indicates one or more second devices, and the one or more second devices are RIS devices. The communication module is configured to communicate with a third device via the one or more second devices.

In another aspect, a communication apparatus is provided in embodiments of the present disclosure. The apparatus includes a sending module and a communication module. The sending module is configured to send first information to a first device, where the first information indicates one or more second devices, and the one or more second devices are RIS devices. The communication module is configured to communicate with the first device via the one or more second devices.

In another aspect, a communication device is provided in embodiments of the present disclosure. The communication device includes a processor, a memory, and a transceiver. The memory is configured to store a computer program. The processor is configured to execute the computer program, to cause the communication device to implement the communication method mentioned above.

In yet another aspect, a computer-readable storage medium is further provided in embodiments of the present disclosure. The computer-readable storage medium is configured to store a computer program, and the computer program is loaded and executed by a processor to implement the communication method mentioned above.

In yet another aspect, a chip is further provided in the present disclosure. The chip includes an integrated circuit and firmware disposed in the integrated circuit. The chip is configured to execute in a communication device, to cause the communication device to perform the communication method mentioned above.

In yet another aspect, a computer program product is provided in the present disclosure. The computer program product includes computer instructions stored in a computer-readable storage medium. A processor of a communication device is configured to read the computer instructions from the computer-readable storage medium and execute the computer instructions, to cause the communication device to perform the communication method mentioned above.

In yet another aspect, a computer program is provided in the present disclosure. The computer program is executed by a processor of a communication device, to implement the communication method mentioned above.

A communication scheme is provided in embodiments of the present disclosure. A third device can indicate one or more RIS devices to a first device via first information, such that the first device can better utilize the RIS devices to communicate with the third device, thereby improving the effect of communication between two communication devices via the RIS devices, and thus further improving communication performance of a wireless system.

### BRIEF DESCRIPTION OF THE DRAWINGS

FIG. 1 is a schematic architectural diagram of a communication system provided in an embodiment of the present disclosure.
FIG. 2 is a schematic diagram illustrating enhancement of network coverage via an RIS device involved in the present disclosure.
FIG. 3 is a schematic diagram illustrating solving coverage holes via an RIS device involved in the present disclosure.
FIG. 4 is a schematic diagram illustrating implementation of MIMO communication via an RIS device involved in the present disclosure.
FIG. 5 is a flowchart of a communication method provided in an embodiment of the present disclosure.
FIG. 6 is a flowchart of a communication method provided in an embodiment of the present disclosure.
FIG. 7 is a framework diagram illustrating communication via an RIS device involved in the present disclosure.
FIG. 8 is a flowchart of a communication method provided in an embodiment of the present disclosure.
FIG. 9 is a schematic diagram of a communication architecture involved in the present disclosure.
FIG. 10 is a schematic diagram of another communication architecture involved in the present disclosure.
FIG. 11 is a schematic diagram illustrating two operating modes of an RIS device involved in the present disclosure.
FIG. 12 is a schematic diagram illustrating determination of spatial information involved in the present disclosure.
FIG. 13 is a schematic diagram illustrating an information indication manner involved in the present disclosure.
FIG. 14 is a block diagram of a communication apparatus provided in an embodiment of the present disclosure.
FIG. 15 is a block diagram of a communication apparatus provided in an embodiment of the present disclosure.
FIG. 16 is a schematic structural diagram of a communication device provided in an embodiment of the present disclosure.

### DETAILED DESCRIPTION

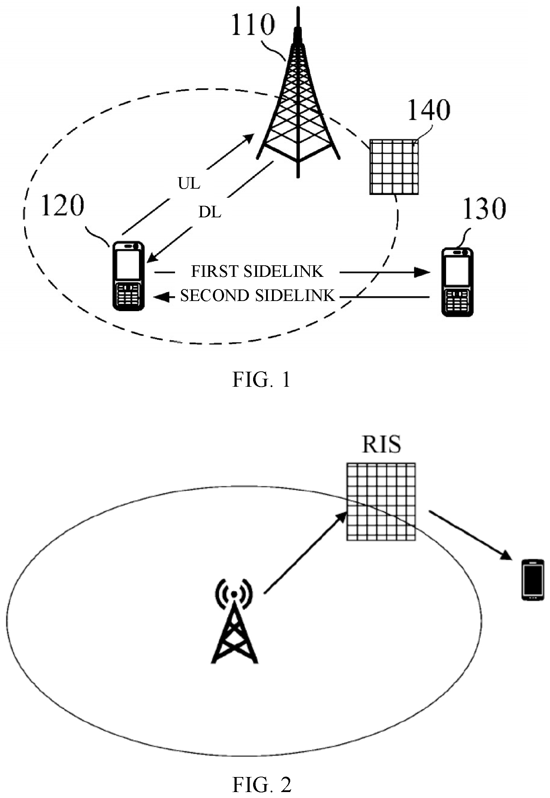

FIG. 1 illustrates a schematic diagram of a communication system involved in an exemplary embodiment of the present disclosure. The communication system includes a network device 110, a terminal device 120, and a reconfigurable intelligent surface (RIS) device 140, and/or the communication system includes a terminal device 120, a terminal device 130, and an RIS device 140, which is not limited in the present disclosure.

The network device 110 in the present disclosure provides wireless communication functions. The network device 110 includes but not limited to: an evolved node B (eNB), a radio network controller (RNC), a node B (NB), a base station controller (BSC), a base transceiver station (BTS), a home base station (e.g., a home evolved node B, or a home node B (HNB)), a baseband unit (BBU), an access point (AP) in a wireless fidelity (Wi-Fi) system, a wireless relay node, a wireless backhaul node, a transmission point (TP), a transmission and reception point (TRP), etc. It may also be a next generation node B (gNB) or a transmission point (a TRP or a TP) in a 5th generation (5G) mobile communication system, or an antenna panel or a group of antenna panels( including multiple antenna panels) of a base station in the 5G system, or a network node constituting a gNB or a transmission point, such as a baseband unit (BBU) or a distributed unit (DU), etc., or a base station in a beyond 5th generation (B5G) mobile communication system, a 6th generation (6G) mobile communication system, etc., or a core network (CN), a fronthaul, a backhaul, a radio access network (RAN), a network slice, etc., or a serving cell, a primary cell (PCell), a primary secondary cell (PSCell), a special Cell (SpCell), a secondary cell (SCell), a neighboring cell, etc., of a terminal device.

The terminal device 120 and/or the terminal device 130 in the present disclosure, also known as a user equipment (UE), an access terminal, a user unit, a user station, a mobile station, a mobile platform, a remote station, a remote terminal, a mobile device, a user terminal, a terminal, a wireless communication device, a user agent, a user apparatus. The terminal includes but is not limited to: a handheld device, a wearable device, an in-vehicle device, an Internet of things (IoT) device, etc., such as: a mobile phone, a tablet, an e-book reader, a laptop, a desktop computer, a television, a game console, a mobile Internet device (MID), an augmented reality (AR) terminal, a virtual reality (VR) terminal, and a mixed reality (MR) terminal, a wearable device, a handle, an electronic tag, a controller, a wireless terminal in industrial control, a wireless terminal in self-driving, a wireless terminal in remote medical, a wireless terminal in smart grid, a wireless terminal in transportation safety, a wireless terminal in smart city, a wireless terminal in smart home, a wireless terminal in remote medical surgery, a cellular phone, a cordless phone, a session initiation protocol (SIP) phone, a wireless local loop (WLL) station, a personal digital assistant (PDA), a set top box (STB), a customer premise equipment (CPE), etc.

The network device 110 and the terminal device 120 communicate with each other using a certain air interface technology, such as a Uu interface.

Exemplarily, there are two communication scenarios between the network device 110 and the terminal device 120: an uplink (UL) communication scenario and a downlink (DL) communication scenario. The UL communication refers to sending signals to the network device 110. The DL communication refers to sending signals to the terminal device 120.

The terminal device 120 and the terminal device 130 communicate with each other using a certain air interface technology, such as a PC5 interface.

In some embodiments, there are two communication scenarios between the terminal device 120 and the terminal device 130: a first sidelink communication scenario and a second sidelink communication scenario. The first sidelink communication refers to sending signals to the terminal device 130. The second sidelink communication refers to sending signals to the terminal device 120.

Both the terminal device 120 and the terminal device 130 are within a network coverage and located in the same cell, or both the terminal device 120 and the terminal device 130 are within the network coverage but located in different cells, or the terminal device 120 is within the network coverage and the terminal device 130 is outside the network coverage.

The RIS device 140 is also referred to as a large intelligent surface (LIS) device, a smart reflect array (SRA) device, a reconfigurable reflect array (RRA) device, an intelligent reflecting surface (IRS) device, etc.

In some embodiments, the RIS device 140 intelligently reconfigures the wireless propagation environment by integrating a large number of reflective elements on a plane, thereby significantly improving the performance of the wireless communication network. For example, a different reflective element of the RIS device can independently reflect incident signals by controlling amplitude and/or phase.

In some embodiments, the network device 110 and the terminal device 120, or the terminal device 120 and the terminal device 130, can communicate with each other via the RIS device 140. For example, the RIS device 140 may reflect a wireless signal sent by the network device 110 to the terminal device 120, or may reflect a wireless signal sent by the terminal device 120 to the network device 110. For another example, the RIS device 140 may reflect a wireless signal sent by the terminal device 120 to the terminal device 130, or may reflect a wireless signal sent by the terminal device 130 to the terminal device 120.

The technical solutions provided in embodiments of the present disclosure may be applied to various communication systems, such as: a global system of mobile communication (GSM) system, a code division multiple access (CDMA) system, a wideband code division multiple access (WCDMA) system, a general packet radio service (GPRS) system, a long term evolution (LTE) system, a LTE frequency division duplex (FDD) system, an LTE time division duplex (TDD) system, an advanced long term evolution (LTE-A) system, a universal mobile telecommunication system (UMTS), a worldwide interoperability for microwave access (WiMAX) communication system, a 5G mobile communication system, a new radio (NR) system, an evolved system of the NR system, an LTE-based access to unlicensed spectrum (LTE-U) system, an NR-based access to unlicensed spectrum (NR-U) system, a terrestrial network (TN) system, a non-terrestrial network (NTN) system, a wireless local area network (WLAN) system, a Wi-Fi system, a cellular IoT system, a cellular passive IoT system, and may also be applied to subsequent evolution systems of a 5G NR system, and may also be applied to B5G, 6G, and subsequent evolution systems. In some embodiments of the present disclosure, "NR" may also be referred to as a 5G NR system or a 5G system. Among them, the 5G mobile communication system may include non-standalone (NSA) and/or standalone (SA).

The technical solutions provided in embodiments of the present disclosure may also be applied to a machine type communication (MTC), a long term evolution-machine (LTE-M), a device-to-device (D2D) network, a machine-to-machine (M2M) network, an IoT network, or other networks. The IoT network may include, for example, an Internet of vehicles. The communication methods in the Internet of vehicles system are collectively referred to as vehicle to X (V2X, X may represent anything). For example, the V2X may include: vehicle-to-vehicle (V2V) communication, vehicle-to-infrastructure (V2I) communication, vehicle-to-pedestrian (V2P) communication, vehicle-to-network (V2N) communication, etc.

### 1. Physical downlink shared channel (PDSCH) transmission scheme for multiple TRPs

In NR Release 16, PDSCHs from two TRPs scheduled by single-downlink control information (s-DCI) may be distinguished according to transmission configuration indication (TCI) states. One state of a TCI information field in DCI may be mapped to up to two TCI states, and each TCI state corresponds to one of the PDSCHs transmitted using frequency division multiplexing (FDM) or space division multiplexing (SDM).

Due to different spatial positions of different TRPs, large-scale characteristics of channels corresponding to various TRPs have obvious differences. Therefore, during multi-TRP joint transmission, quasi-co-location (QCL) information corresponding to various TRPs needs to be indicated, respectively. In R15, one state of a TCI information field in DCI corresponds to only one TCI state. In order to support multi-TRP-based transmission, in R16, media access control-control element (MAC-CE) signaling is enhanced, i.e., one state of the TCI information field in the DCI may be mapped to up to two TCI states. If the TCI information field indicated in the DCI indicates two TCI states, a PDSCH associated with the first TCI state will be transmitted using a demodulation reference signal (DMRS) port indicated in the first code division multiplexing (CDM) group, and a PDSCH associated with the second TCI state will be transmitted using a DMRS port indicated in the second CDM group. A beam direction of a PDSCH is the same as a beam direction of a synchronization signal and physical broadcast channel block (SSB) or a channel state information-reference signal (CSI-RS) that corresponds to a TCI state.

The configuration and indication of TCI states include three steps: radio resource control (RRC) configuration, MAC-CE activation, and DCI indication. A specific process is as follows.
1) RRC configures up to *M* TCI states for a terminal device through *PDSCH-Config*, where a value of *M* is determined by UE capability, and a maximum value of *M* can be 128.
2) MAC-CE activates up to 8 TCI state groups for mapping to a 3-bit TCI information field in DCI. Each TCI state group activated by the MAC-CE may contain one or two TCI states. If a higher-layer parameter configures that DCI contains a TCI indication field, DCI format 1_1 may indicate one TCI state group from the TCI state groups activated by MAC. If a higher-layer parameter configures that DCI does not contain a TCI indication field or data is scheduled via DCI format 1_0, the DCI will not contain the TCI state indication field.

One TCI state may contain the following configurations: TCI state ID, used to identify one TCI state; QCL information 1; and QCL Information 2.

One QCL information contains the following information: a QCL type configuration, which may be one of QCL type A, QCL type B, QCL type C, or QCL type D; and a QCL reference signal configuration, which includes a cell ID where a reference signal is located, a bandwidth part (BWP) ID, and reference signal information (which may be a CSI-RS resource ID or an SSB index).

Definitions of different QCL type configurations are as follows:
'QCL-TypeA': {Doppler shift, Doppler spread, average delay, delay spread};
'QCL-TypeB': {Doppler shift, Doppler spread};
'QCL-TypeC': {Doppler shift, average delay}; and
'QCL-TypeD': {Spatial Rx parameter}.

### 2. Intelligent reflecting surface technology

Intelligent surface is an emerging technology, and the following multiple related terms represent a similar technology or entity. These terms include: an LIS, an SRA, an RRA, and an IRS, and an RIS. For ease of illustration, RIS is used for elaboration later.

Since radio frequency and baseband processing circuits are not required, an intelligent surface device has several advantages over a conventional wireless communication transceiving device: (1) lower cost and implementation complexity; (2) lower power consumption; (3) no additional thermal noise at a receiving end; and (4) thin and lightweight, enabling flexible deployment.

RIS can be classified into passive RIS, active RIS, and combined active-passive RIS. As for passive RIS, since the intelligent surface is composed of a large number of passive component units and does not have radio frequency and baseband processing capabilities, the intelligent surface is referred to as a passive intelligent surface. Since the passive intelligent surface is composed of a large number of passive component units and does not have radio frequency and baseband processing capabilities, and the passive component units cannot receive, measure, or send signals, the base station is unable to separately obtain channel information from the base station to the intelligent surface and from the intelligent surface to the terminal device. This intelligent surface on which some active components are installed has the capability of receiving and even sending signals, and is a combined active-passive intelligent surface (or an active intelligent surface).

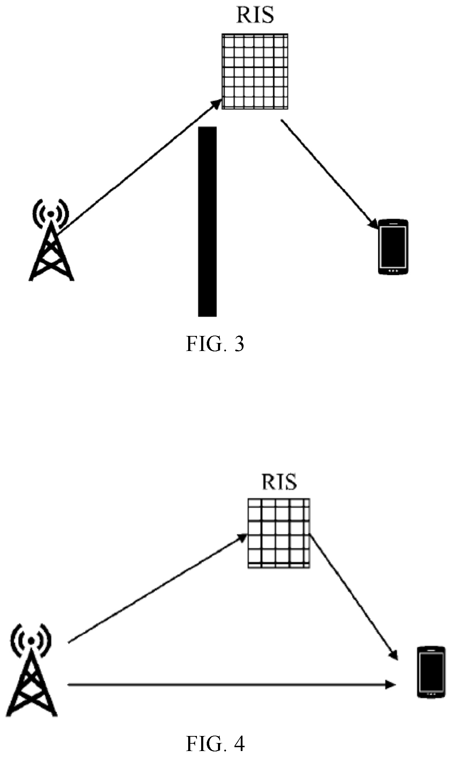

Several possible application scenarios of RIS are as follows.
1. It can enhance coverage, enabling a network device and a terminal device to establish a communication link, as illustrated in FIG. 2, which is a schematic diagram illustrating enhancement of network coverage via an RIS device involved in the present disclosure.
2. It can solve a problem of coverage holes, forwarding information for a terminal user in a blocked geographical location, as illustrated in FIG. 3, which is a schematic diagram illustrating solving coverage holes via an RIS device involved in the present disclosure.
3. It can be used for multiple input multiple output (MIMO) communication to enhance system performance, as illustrated in FIG. 4, which is a schematic diagram illustrating implementation of MIMO communication via an RIS device involved in the present disclosure.

As an emerging technology, when a link between the network device and the terminal device is poor, the network device and the terminal device can utilize an RIS device for auxiliary transmission. However, the RIS may be in an activated state or in a deactivated state in the system, and the RIS may achieve different transmission effects by adjusting a parameter(s) of each RIS unit. If the terminal device does not know RIS parameter information, the expected transmission performance cannot be achieved. Additionally, how to indicate beam information based on RIS parameter information is also an issue to be solved. Subsequent embodiments of the present disclosure provide a method for configuring/indicating RIS parameter information and corresponding beam indication.

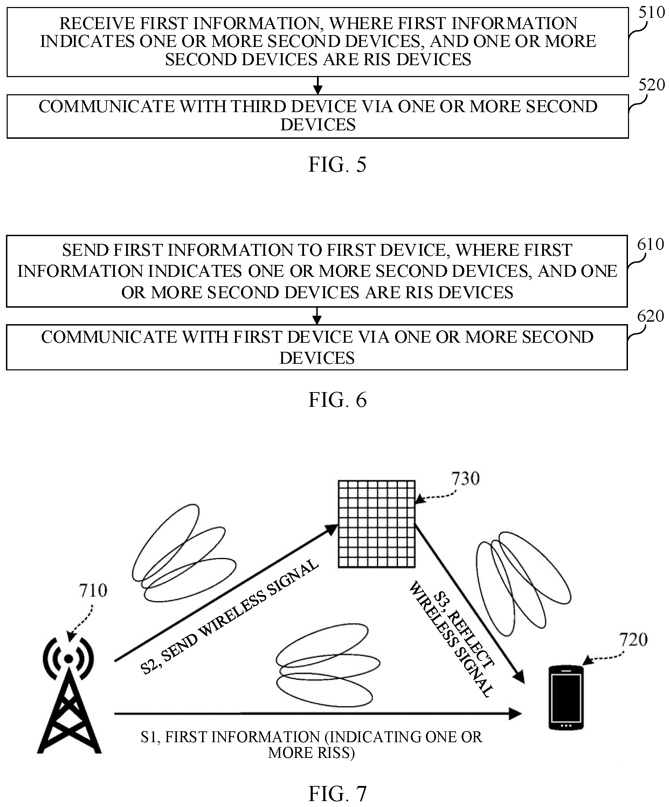

Reference may be made to FIG. 5, which illustrates a flowchart of a communication method provided in an embodiment of the present disclosure. The method can be performed by a first device. The first device may be a terminal device. For example, the terminal device may be one of the terminal device 120 and the terminal device 130 in the network architecture as illustrated in FIG. 1. The method may include the following.

At S510, first information is received, where the first information indicates one or more second devices, and the one or more second devices are RIS devices.

In some embodiments, a third device can indicate one or more available RIS devices (i.e., the second devices) to the first device via the first information, such that the first device can communicate with the third device via the second devices subsequently.

The second device may be the RIS device 140 in the network architecture as illustrated in FIG. 1. The third device may be the network device 110 as illustrated in FIG. 1, or may be another terminal device, other than the first device, among the terminal device 120 and the terminal device 130 as illustrated in FIG. 1.

The first information can indicate the one or more second devices as follows. The first information indicates presence of the one or more second devices in the vicinity. Optionally, the first information may indicate a parameter(s) for the first device to communicate with the third device via the one or more second devices, such as parameters including the number, identity, device type, application time, beam direction, etc., of the second devices.

At S520, communication with the third device is performed via the one or more second devices.

The first device may communicate with the third device via the one or more second devices as follows. A wireless signal sent by the first device reaches the third device after being reflected by the second devices.

And/or, the first device may communicate with the third device via the one or more second devices as follows. The first device receives a wireless signal that is sent by the third device and reflected by the second devices.

In summary, through the solutions as illustrated in embodiments of the present disclosure, the third device can indicate one or more RIS devices to the first device via the first information, such that the first device can better utilize the RIS devices to communicate with the third device, thereby improving the effect of communication between the two communication devices via the RIS devices, and thus further improving the communication performance of the wireless system.

Reference may be made to FIG. 6, which illustrates a flowchart of a communication method provided in an embodiment of the present disclosure. The method can be performed by a third device. The third device may be a network device. For example, the third device may be the network device 110 as illustrated in FIG. 1. Alternatively, the third device may be a terminal device. For example, the third device may be one of the terminal device 120 and the terminal device 130 in the network architecture as illustrated in FIG. 1. The method may include the following.

At S610, first information is sent to a first device, where the first information indicates one or more second devices, and the one or more second devices are RIS devices.

At S620, communication with the first device is performed via the one or more second devices.

In summary, through the solutions as illustrated in embodiments of the present disclosure, the third device can indicate one or more RIS devices to the first device via the first information, such that the first device can better utilize the RIS devices to communicate with the third device, thereby improving the effect of communication between the two communication devices via the RIS devices, and thus further improving the communication performance of the wireless system.

Based on any one or more of the solutions as illustrated in FIG. 5 and FIG. 6 mentioned above, reference may be made to FIG. 7, which is a framework diagram illustrating communication via an RIS device involved in the present disclosure. As illustrated in FIG. 7, a network device 710 (corresponding to the third device) first indicates at least one RIS device 730 (FIG. 7 illustrates one RIS device as an example) to a terminal device 720 (corresponding to the first device) (S1). Subsequently, the network device 710 and the terminal device 720 can communicate with each other through a signal reflection function of the RIS device 730. For example, taking the network device 710 sending a wireless signal to the terminal device 720, the network device 710 sends a wireless signal (S2). After the wireless signal reaches the RIS device 730, the wireless signal is reflected by the RIS device 730 to the terminal device 720, and correspondingly, the terminal device 720 receives the wireless signal reflected by the RIS device 730 (S3).

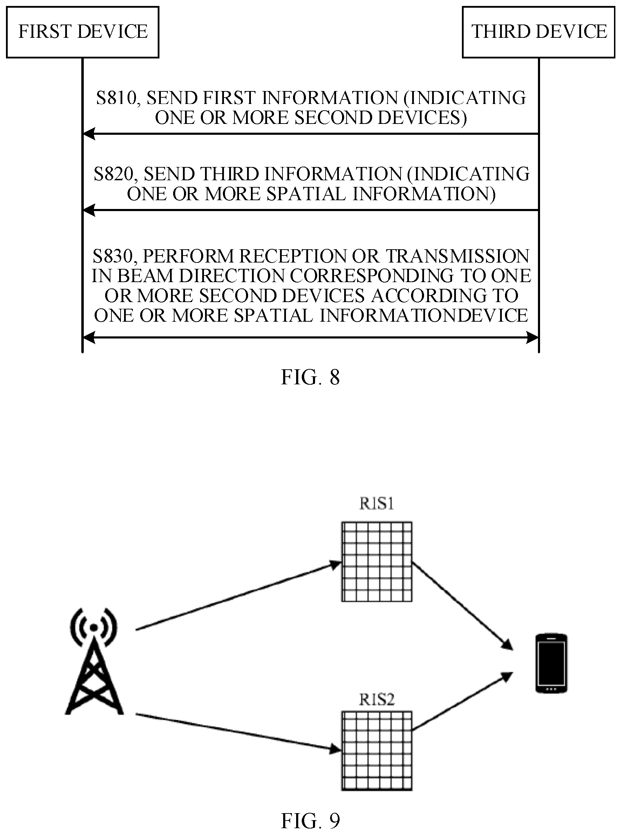

Reference may be made to FIG. 8, which illustrates a flowchart of a communication method provided in an embodiment of the present disclosure. The method can be performed interactively by a first device and a third device. The first device may be a terminal device. For example, the terminal device may be one of the terminal device 120 and the terminal device 130 in the network architecture as illustrated in FIG. 1. The third device may be a network device. For example, the third device may be the network device 110 as illustrated in FIG. 1. Alternatively, the third device may be a terminal device. For example, the third device may be another terminal device, other than the first device, among the terminal device 120 and the terminal device 130 as illustrated in FIG. 1. The method may include the following.

At S810, the third device sends first information to the first device, and correspondingly, the first device receives the first information, where the first information indicates one or more second devices, and the one or more second devices are RIS devices.

In some embodiments, the first information indicates one or more of: a parameter configuration of the second device; and an operating mode during communication between the first device and the third device.

In embodiments of the present disclosure, the parameter configuration of the second device may refer to a parameter configuration that is related to the second device and that the first device needs to know when communicating with the third device via the second device. For example, the parameter configuration may indicate which RISs are included in the second device, a type of the second device, whether the second device is available, when the second device is available, etc.

The operating mode during the communication between the first device and the third device may refer to information indicating a receiver and a sender during the communication between the first device and the third device via the second device(s).

In some embodiments, the parameter configuration of the second device includes one or more of the following information.
1) type indication information of the second device, indicating a device type of the second device, where the device type of the second device may include, but is not limited to: transmission type RIS, reflection type RIS, refraction type RIS, etc.
2) identification information of the second device.
3) activation indication information of the second device, indicating whether the second device is activated, where activation indication information of each second device can be indicated via a single-bit information field. For example, when a value of the activation indication information is 0, it indicates that a corresponding second device is not activated; and when the value of the activation indication information is 1, it indicates that a corresponding second device is activated. For another example, when the value of the activation indication information is 1, it indicates that a corresponding second device is not activated; and when the value of the activation indication information is 0, it indicates that a corresponding second device is activated. For another example, when the activation indication information is configured, it indicates that a corresponding second device is activated; and when the activation indication information is not configured, it indicates that a corresponding second device is not activated. Optionally, when there are multiple second devices, each second device has its own configuration of activation indication information. Optionally, multiple second devices may share single activation indication information, that is, all the multiple second devices are activated/deactivated.
4) application time indication information of the second device, indicating a time at which the second device is applied, where the time at which the second device is applied may refer to a time at which the first device is allowed to communicate with the third device via the second device(s). Optionally, for the case where there are multiple second devices, different second devices may correspond to the same application time indication information, or different second devices may correspond to different application time indication information.
5) the number of one or more second devices.

In some embodiments, the type indication information is associated with one or more of the following information: 1) a beam direction of a reflected signal or a refracted signal from the second device; 2) a beamforming mode of the reflected signal or the refracted signal from the second device; 3) a polarization mode of the reflected signal or the refracted signal from the second device; and 4) a phase of each RIS unit in the second device.

In embodiments of the present disclosure, a different type of the RIS device can be associated with a different beam direction of the reflected signal or the refracted signal, a different beamforming mode of the reflected signal or the refracted signal, a different polarization mode of the reflected signal or the refracted signal, and a different phase of each RIS unit. That is, only by configuring the type indication information via the first information, configuration of at least one of the beam direction of the reflected signal or the refracted signal from the RIS device, the beamforming mode of the reflected signal or the refracted signal from the RIS device, the polarization mode of the reflected signal or the refracted signal from the RIS device, or the phase of each RIS unit can be achieved, thereby simplifying the configuration manner of the information and improving configuration efficiency.

In some embodiments, the type indication information includes a type adjustment pattern of the second device, where the type adjustment pattern indicates a device type of the second device in each of one or more time units.

In embodiments of the present disclosure, the RIS device can be implemented as different device types in different time units, thereby providing flexible services for the first device and the third device. The third device can indicate the type adjustment pattern of the second device to the first device, to indicate the device type of the second device in each time unit to the first device, such that the first device and the second device can more flexibly utilize the second device for communication, thereby improving communication efficiency and flexibility.

In some embodiments, the time unit is a slot, a radio frame, a symbol, a mini-slot, or an absolute time period.

In embodiments of the present disclosure, the second device can change the device type according to the granularity of a slot, a radio frame, a symbol, a mini-slot, or an absolute time period, thereby providing flexible services for the first device and the third device, and thus further improving communication efficiency and flexibility.

In some embodiments, the identification information of the second device includes an index of the second device.

The index of the second device may refer to an RIS index of the second device.

Optionally, the identification information of the second device may also include other information other than the index of the second device, such as a serial number of the second device, a hardware address of the second device, etc.

In some embodiments, the application time indication information of the second device includes one or more of: a configuration period of the second device; and an application time period of the second device.

In embodiments of the present disclosure, an application time of the second device may be periodically configured for the first device and the third device. In this case, the third device can indicate the configuration period of the second device to the first device via the first information, where the configuration period indicates multiple application time periods that appear periodically. For example, the configuration period may include a period length, the length of an application time period in each period, and an offset of the start of an application time period relative to the start of a period.

In embodiments of the present disclosure, the application time of the second device may be configured for the first device and the third device via an absolute time period. In this case, the third device can indicate the application time period of the second device, for example, the start and length of the application time period, to the first device via the first information.

In some embodiments, the operating mode includes one or more of the following. The first device sends second information to the third device. In this operating mode, the first device, as a sender, directly sends the information to the third device. The first device sends the second information to the third device via the one or more second devices. In this operating mode, the first device, as the sender, sends the information to the third device only via the second devices. The first device sends the second information to the third device via the one or more second devices, and the first device directly sends the second information to the third device. In this operating mode, the first device, as the sender, sends the information to the third device via the second devices, and directly sends the information to the third device, thereby realizing MIMO communication based on the second devices. The first device receives the second information sent by the third device. In this operating mode, the first device, as a receiver, directly receives the information sent by the third device. The first device receives the second information sent by the third device via the one or more second devices. In this operating mode, the first device, as the receiver, receives the information sent by the third device only via the second devices. The first device receives the second information sent by the third device via the one or more second devices, and the first device directly receives the second information sent by the third device. In this operating mode, the first device, as the receiver, receives the information sent by the third device via the second devices, and directly receives information sent by the third device, thereby realizing MIMO communication based on the second devices.

In embodiments of the present disclosure, the third device can indicate to the first device a sender and a receiver during communication between them, whether communication is performed only via the second devices, whether MIMO communication is performed via the second devices, etc.

In some embodiments, the second information includes one or more of: control information, data, and a reference signal.

In embodiments of the present disclosure, the first device and the third device can transmit any type of information, such as control information, data, and a reference signal, via the second device(s).

In some embodiments, the first information is carried in one or more of the following information: an SIB, RRC signaling, MAC signaling, and DCI signaling.

In embodiments of the present disclosure, the third device may carry the first information in one of an SIB, RRC signaling, MAC signaling, or DCI signaling, or in more of an SIB, RRC signaling, MAC signaling, and DCI signaling, thereby ensuring applicable scenarios for the transmission of the first information.

At S820, the third device sends third information to the first device, and correspondingly, the first device receives the third information, where the third information indicates one or more spatial information, and the one or more spatial information indicates a beam direction.

In embodiments of the present disclosure, the one or more spatial information can indicate a beam direction used by the first device for transmission. The transmission may refer to the first device receiving or sending signals. That is, the third information indicates a beam direction for the first device to receive or send information.

In some embodiments, the first information and the third information may be different information. For example, the first information and the third information may be different information carried in the same wireless signal/wireless signaling, or the first information and the third information may be different information carried in different wireless signals/wireless signaling.

In some embodiments, the first information and the third information may be the same information.

In some embodiments, a spatial information set to which the one or more spatial information belongs is associated with the first information.

In the solutions as illustrated in embodiments of the present disclosure, the third device can select one or more spatial information from the spatial information set associated with the first information and indicate the selected one or more spatial information to the first device, such that the first device and the third device can communicate with each other via the second device(s) subsequently, thereby ensuring accuracy of indicating the spatial information while improving efficiency of indicating the spatial information.

In some embodiments, the spatial information set to which the one or more spatial information belongs is associated with the type indication information of the second device contained in the first information.

In embodiments of the present disclosure, an associated spatial information set can be configured for a device type of the second device. That is, a different device type of the second device can correspond to a different spatial information set. The third device can configure spatial information matching the device type of the second device to the first device via the third information, thereby ensuring the accuracy of indicating the spatial information, and thus further ensuring subsequent communication effect.

In some embodiments, the spatial information includes one or more of the following information: a TCI state, a unified TCI state, a beam direction, a beam index, a DL spatial relation filter, a UL spatial relation filter, a reference signal resource, and a QCL relation.

In some embodiments, a spatial information state in a spatial information set associated with different type indication information is not completely the same.

That is, the spatial information (such as a TCI state, a unified TCI state, a beam direction, a beam index, a DL spatial relation filter, a UL spatial relation filter, a reference signal resource, and a QCL relation) in the spatial information set associated with different type indication information may be completely different. Alternatively, the spatial information in the spatial information set associated with different type indication information may be partially the same and partially different.

In some embodiments, in the case where the first information indicates multiple second devices, spatial information sets associated with type indication information of the multiple second devices are subsets of a same spatial information set.

In embodiments of the present disclosure, for the multiple second devices indicated by the same first information, the spatial information sets associated with the device type indication information of the multiple second devices can be from a same large spatial information set. For example, the spatial information sets associated with the device type indication information of the multiple second devices can be from a same TCI state set, thereby ensuring matching and correlation between spatial information of the multiple second devices during a single communication process performed between the first device and the third device via the multiple second devices, thereby ensuring the effect of the communication between the first device and the third device via the multiple second devices.

In some embodiments, a spatial information field contained in the third information is associated with an operating mode during the communication between the first device and the third device, and a parameter in the spatial information field indicates the spatial information.

In some embodiments, in the case where the operating mode during the communication between the first device and the third device includes that the first device sends the second information to the third device via the one or more second devices and/or the first device receives the second information sent by the third device via the one or more second devices, the third information contains a first spatial information field, where the first spatial information field indicates a beam direction corresponding to the one or more second devices.

In some embodiments, in the case where the operating mode during the communication between the first device and the third device includes that the first device sends the second information to the third device and/or the first device receives the second information sent by the third device, the third information contains a second information field, where the second spatial information field indicates a beam direction corresponding to the third device.

For example, when the first device and the third device communicate with each other only via the second device, the third information may contain a first spatial information field and not contain a second spatial information field. When the first device and the third device directly communicate with each other without via the second device, the third information may contain a second spatial information field and not contain a first spatial information field. When the first device and the third device implement MIMO communication via the second device(s), i.e., both direct communication and communication via the second device, the third information may contain both a first spatial information field and a second spatial information field.

At S830, the first device performs reception or transmission in a beam direction corresponding to the one or more second devices according to the one or more spatial information, to implement communication with the third device.

In embodiments of the present disclosure, the first device may send a wireless signal in a direction where the second device(s) is located according to the one or more spatial information.

Alternatively, the third device may send a wireless signal in the direction where the second device(s) is located, and correspondingly, the first device may receive the wireless signal from the direction where the second device(s) is located according to the one or more spatial information.

A scheme for communication via an RIS device is provided in the embodiments as illustrated in FIG. 5, FIG. 6, or FIG. 8 of the present disclosure. The scheme may include the following.
1) A first device receives first information sent by a third device, and the first device transmits first transmission information according to the first information. The first information indicates one or more of: operating mode indication information of the first device, type indication information of a second device (an RIS device), identification information of the second device, activation indication information of the second device, application time indication information of the second device, and the number of one or more second devices.
2) The operating mode of the first device includes at least one of a first mode, a second mode, or a third mode.

First mode: the first device receives DL information sent by the third device, or sends UL information to the third device.

Second mode: the first device receives DL information sent by the third device via the second device, or the first device sends UL information to the third device via the second device.

Third mode: the first device receives DL information sent by the third device, and also receives DL information sent by the third device via the second device; and the first device sends UL information to the third device, and also sends UL information to the third device via the second device.

3) The type indication information of the second device is associated with at least one of: a beam direction of a reflected signal or a refracted signal from an RIS or a relay; a beamforming mode of the reflected signal or the refracted signal from the RIS or the relay; a polarization mode of the reflected signal or the refracted signal from the RIS or the relay; and a phase of each RIS unit.

4) The identification information of the second device includes an index of the second device (an RIS index).

5) Before the first device receives DL information or sends UL information according to the first information, the method further includes the following. The first device receives second information sent by the third device. The second information indicates one or more spatial information.

6) A spatial information set to which the one or more spatial information belongs is associated with the first information.

7) Different content indicated by the first information corresponds to different spatial information sets.

8) The number of information fields, indicating spatial information, in the second information is determined according to the operating mode of the first device indicated by the first information.

The scheme is introduced below with two embodiments.

### Embodiment 1:

The first device receives the first information sent by the third device, and the first device transmits the first transmission information according to the first information. The first transmission information may be a UL channel or signal, or may be a DL channel or signal. Transmission may be receiving a DL channel or signal or sending a UL channel or signal.

The third device may be: a base station, a TRP, or an AP.

The first device may be: a terminal device served by the third device.

The second device is an RIS device.

The first information indicates one or more of: operating mode indication information of the first device, type indication information of the second device, identification information of the second device, activation indication information of the second device, application time indication information of the second device, and the number of the one or more second devices. For ease of illustration, the first information is a general term, and various items contained therein may be indicated via different higher-layer signaling or physical layer signaling, respectively. The first information is used to notify the first device of a parameter(s) of the second device and configuration information of the second device.

The operating mode of the first device includes at least one of a first mode, a second mode, or a third mode.

First mode: the first device receives DL information sent by the third device, or sends UL information to the third device. The first mode is optional and is a default mode. If the second mode or the third mode is not indicated, the first mode can be adopted.

Second mode: the first device receives DL information sent by the third device via the second device, or the first device sends UL information to the third device via the second device.

The second mode can be applied in combination with the number of second devices introduced below. If the number of second devices is 2, two second devices are applied. Reference may be made to FIG. 9, which illustrates a schematic diagram of a communication architecture involved in the present disclosure. As illustrated in FIG. 9, this communication mode can enhance signal coverage, improve throughput at the cell edge, and increase system capacity.

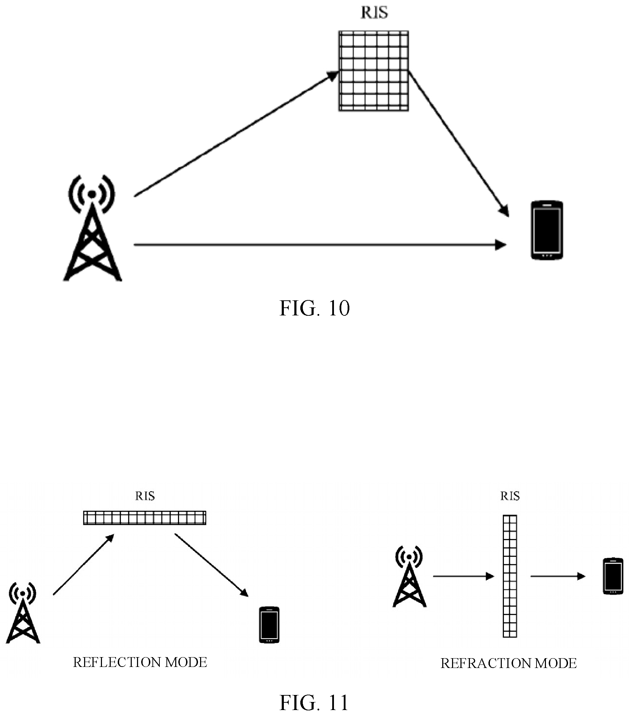

Third mode: the first device receives DL information sent by the third device, and also receives DL information sent by the third device via the second device; and the first device sends UL information to the third device, and also sends UL information to the third device via the second device. Reference may be made to FIG. 10, which illustrates a schematic diagram of another communication architecture involved in the present disclosure. As illustrated in FIG. 10, this communication mode can enhance signal coverage, improve throughput at the cell edge, and increase system capacity.

Similarly, the third mode can be applied in combination with the number of second devices introduced below. If the number of second devices is 2, two second devices are applied.

Reference may be made to FIG. 11, which illustrates a schematic diagram illustrating two operating modes of an RIS device involved in the present disclosure. The type indication information of the second device is associated with at least one of the following. It can be understood that, different configurations of the following items correspond to different RIS types.
1) The beam direction of the reflected signal or the refracted signal from the second device: for example, a different operating mode corresponds to a different beam direction of the reflected signal, or a different operating mode corresponds to a different beam direction of the refracted signal.
2) The beamforming mode of the reflected signal or the refracted signal from the second device: for example, the beamforming mode of the RIS is obtained by adjusting an on/off of a diode associated with an RIS unit, i.e., a different on/off pattern of the diode corresponds to a different beamforming mode of the reflected signal or the refracted signal from the RIS, and thus corresponds to a different operating mode of the RIS.
3) The polarization mode of the reflected signal or the refracted signal from the second device: the polarization mode includes a horizontal polarization or a vertical polarization. For example, a different operating mode corresponds to a different polarization mode.
4) The phase of each RIS unit in the second device.

When the operating mode of the first device is the second mode or the third mode, the first information needs to indicate the type of the second device.

As an example, the type of the second device includes transmission type RIS, reflection type RIS, refraction type RIS, and RIS type where RIS units can be processed in partitions.

An example configuration of the type indication information of the second device is as follows.

The type indication information of the second device is configured via cell-specific signaling, UE-specific signaling, or a combination thereof. For a serving UE, the second device can only operate in one type at a time point, too frequent type adjustments will increase signaling overhead and increase the complexity and cost of RIS implementation. Therefore, a predefined type adjustment pattern of the second device can be considered to avoid the problem. The type adjustment pattern of the second device within a first time interval is configured via an SIB or RRC signaling. A unit of the first time interval may be a slot, a radio frame, a symbol, a mini-slot, or an absolute time. Taking a slot as an example, as illustrated in Table 1 below:

**Table 1**

| | | | | | | |
|---|---|---|---|---|---|---|
| Slot number | 0 | 1 | 2 | 3 | 4 | 5 |
| Type | Type 1 | Type 1 | Type 1 | Type 2 | Type 2 | Type 2 |

The identification information of the second device includes the index of the second device (RIS index). That is, an RIS index associated with the third device, an RIS index associated with the first device, or an RIS index associated with both the third device and the first device. Since multiple second devices may be deployed within a certain range, and a certain UE is served via one or more of the multiple second devices, an index of the second device corresponding to a different UE may be different.

Whether the second device is activated: the second device can be used to enhance the coverage of the third device, that is, to solve the problem of blind coverage areas, or to increase network capacity to obtain diversity gain. When there is such a need, the second device can be activated. When there is no such need or for energy-saving considerations of the second device, the second device may not be activated. It can be used in conjunction with the identification information of the second device to indicate whether the second device corresponding to the identification information of the second device is activated. For example, 1 bit indicates two states: activated and deactivated. If not configured, the second device is deactivated by default.

The application time for activating the second device includes one or more of: a configuration period of the second device, and an application time period of the second device. The second device may be configured periodically, or may operate within an application time period during a period. The application time period of the second device may be configured via a timer, and the second device is switched to a deactivated state upon the expiry of the timer. The start time of the timer may be any time within a configuration period.

The number of second devices: in this embodiment, one or more second devices may be activated to facilitate transmission, thereby increasing system capacity and throughput.

The first information may be carried in one or more of an SIB, RRC signaling, MAC signaling, and DCI signaling. The content in the first information may be carried in the same signaling or in multiple signaling, which is not limited herein.

### Embodiment 2:

Before the first device receives DL information or sends UL information according to the first information, the method further includes the following. The first device receives the second information sent by the third device.

The second information indicates one or more spatial information. The second information is associated with the first information.

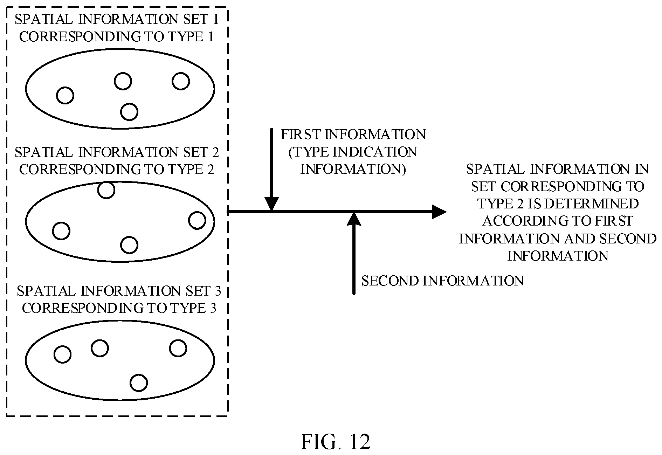

In an embodiment, a spatial information set to which the one or more spatial information belongs is associated with the first information (for example, the type (i.e., device type) of the second device indicated by the first information). Since there may be multiple types of second devices, a second device of a different type can form a different beam by adjusting various parameters of the RIS unit. Therefore, spatial information sets corresponding to different types of second devices are different. The second device is introduced into the network to solve problems such as coverage holes and coverage enhancement, and is a newly added communication link. If a common spatial parameter set is used, a transmission beam or a reception beam will be newly added. By matching a different type of second device to a different spatial information set, the load of beam maintenance can be reduced. The spatial information may be a TCI state, a unified TCI state, a beam direction, a beam index, a DL spatial relation filter, a UL spatial relation filter, a reference signal resource (an SSB resource, a CSI-RS resource, an SRS resource), a QCL relation, etc. Reference may be made to FIG. 12, which is a schematic diagram illustrating determination of spatial information involved in the present disclosure. The embodiment is described below with an example that the spatial information is a TCI state/unified TCI state according to FIG. 12.

Step 1, a spatial information set, i.e., a TCI state list, corresponding to each type of second device is configured via RRC parameters. Specifically, a joint TCI state set or a DL TCI state set can be configured in PDSCH configuration information (*PDSCH-config*) or in dedicated DL BWP configuration information (*BWP-DownlinkDedicated*). A UL TCI state set can be configured in physical uplink shared channel (PUSCH) configuration information (*PUSCH-config*) or in dedicated UL BWP configuration information (*BWP-UplinkDedicated*). A different type of TCI has the same structure, and the maximum number of TCI states may be the same or different. An example of RRC signaling is as follows:

### Example 1:

```
UL TCI state set-Type 1 SEQUENCE {
      ul-TCI-ToAddModList SEQUENCE (SIZE (1..maximum number of TCI states)) OF
 TCI-UL-State
      ul-TCI-ToReleaseList SEQUENCE (SIZE (1.. maximum number of TCI states)) OF TCI-
 UL-State-Id
      }
```

### Example 2:

```
Joint or DL TCI state set-Type 1 SEQUENCE {
      dl-OrJoint-TCI-State-ToAddModList SEQUENCE (SIZE (1..maxUL-TCI-r17)) OF TCI-
 UL-State
      dl-OrJoint-TCI-State-ToReleaseList SEQUENCE (SIZE (1..maxUL-TCI)) OF TCI-UL-
 State-Id
      }
```

Step 2, the first device receives the first information. A TCI state set is matched according to the type of the second device in the first information. For example, if the first information indicates Type 2, a TCI state set mapped by the joint or DL TCI state set-Type 2 or the UL TCI state set-Type 2 is applied.

Step 3, the first device receives the second information. One or more spatial information is determined according to spatial information indicated by the second information and a TCI state set matched with the first information. The second information may be carried in one or more of RRC signaling, MAC signaling, and DCI signaling. For example, if the second information is 2 bits, it can indicate one of four TCI states contained in the DL TCI state set-Type 2 or the UL TCI state set-Type 2.

The example mentioned above illustrates that the spatial parameter sets are configured via RRC signaling, respectively, and the second information may be RRC signaling, an MAC-CE, or DCI signaling. In another example, one spatial information set that is a full set is configured via RRC signaling, a subset of the spatial information associated with the first information is indicated via an MAC-CE, and the second information is carried in DCI.

It may be noted that, TCI states in a spatial information set corresponding to each type of second device may be the same or not completely the same. For example, an index of each TCI state may be the same or different. The spatial information set corresponding to each type of second device may be a subset of a certain TCI state set.

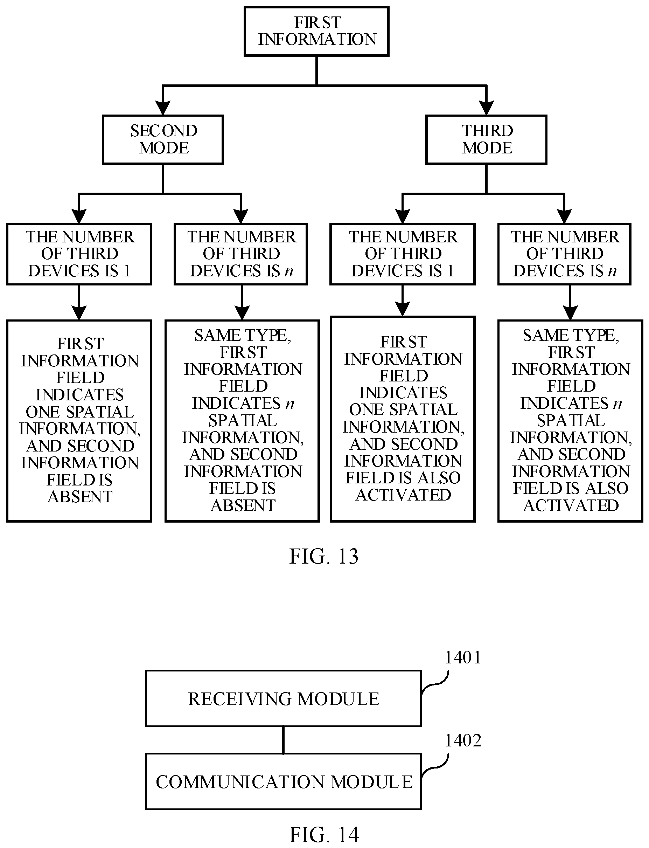

In another embodiment, a spatial information set to which the one or more spatial information belongs is associated with the first information. The first information indicates the operating mode of the first device and the type of the second device. Reference may be made to FIG. 13, which is a schematic diagram illustrating an information indication manner involved in the present disclosure. As illustrated in FIG. 13, the following are illustrated.

When the operating mode of the first device is the second mode, the second information only contains a first information field indicating spatial information. If there are multiple second devices and the types of the second devices are the same, the information field can indicate that multiple spatial information is used for transmissions corresponding to the second devices, respectively. In this case, the second information field may be absent.

When the operating mode of the first device is the third mode, the second information contains two information fields each indicating spatial information, i.e., a first information field and a second information field, and both the first information field and the second information field are present. If there are multiple second devices and the types of the second devices are the same, these information fields can indicate multiple spatial information that are used for transmissions corresponding to the second devices, respectively. Spatial information indicated by the first information field and spatial information indicated by the second information field belong to different spatial information sets.

This embodiment can reduce the load of beam maintenance while providing a method for determining the number of information fields indicating the spatial information.

Reference may be made to FIG. 14, which illustrates a block diagram of a communication apparatus provided in an embodiment of the present disclosure. The communication apparatus has the function of implementing the method performed by the first device in any of the methods as illustrated in FIG. 5, FIG. 6, or FIG. 8. As illustrated in FIG. 14, the apparatus may include a receiving module 1401 and a communication module 1402. The receiving module 1401 is configured to receive first information, where the first information indicates one or more second devices, and the one or more second devices are RIS devices. The communication module 1402 is configured to communicate with a third device via the one or more second devices.

In some embodiments, the first information indicates one or more of: a parameter configuration of the second device; and an operating mode during communication between a first device and the third device.

In some embodiments, the parameter configuration of the second device includes one or more of the following information: type indication information of the second device, indicating a device type of the second device; identification information of the second device; activation indication information of the second device, indicating whether the second device is activated; application time indication information of the second device, indicating a time at which the second device is applied; and the number of the one or more second devices.

In some embodiments, the type indication information is associated with one or more of the following information: a beam direction of a reflected signal or a refracted signal from the second device; a beamforming mode of the reflected signal or the refracted signal from the second device; a polarization mode of the reflected signal or the refracted signal from the second device; and a phase of each RIS unit in the second device.

In some embodiments, the type indication information includes a type adjustment pattern of the second device, where the type adjustment pattern indicates a device type of the second device in each of one or more time units.

In some embodiments, the time unit is a slot, a radio frame, a symbol, a mini-slot, or an absolute time period.

In some embodiments, the identification information of the second device includes an index of the second device.

In some embodiments, the application time indication information of the second device includes one or more of: a configuration period of the second device; and an application time period of the second device.

In some embodiments, the operating mode includes one or more of the following. The first device sends second information to the third device. The first device sends the second information to the third device via the one or more second devices. The first device sends the second information to the third device via the one or more second devices, and the first device directly sends the second information to the third device. The first device receives the second information sent by the third device. The first device receives the second information sent by the third device via the one or more second devices. The first device receives the second information sent by the third device via the one or more second devices, and the first device directly receives the second information sent by the third device.

In some embodiments, the second information includes one or more of: control information, data, and a reference signal.

In some embodiments, the first information is carried in one or more of the following information: an SIB, RRC signaling, MAC signaling, and DCI signaling.

In some embodiments, the receiving module is further configured to receive third information, where the third information indicates one or more spatial information, and the one or more spatial information indicates a beam direction. The communication module is configured to perform reception or transmission in a beam direction corresponding to the one or more second devices according to the one or more spatial information, to implement communication with the third device.

In some embodiments, a spatial information set to which the one or more spatial information belongs is associated with the first information.

In some embodiments, the spatial information set to which the one or more spatial information belongs is associated with the type indication information of the second device contained in the first information.

In some embodiments, the spatial information includes one or more of the following information: a TCI state, a unified TCI state, a beam direction, a beam index, a DL spatial relation filter, a UL spatial relation filter, a reference signal resource, and a QCL relation.

In some embodiments, spatial information in a spatial information set associated with different type indication information is not completely the same.

In some embodiments, in the case where the first information indicates multiple second devices, spatial information sets associated with type indication information of the multiple second devices are subsets of a same spatial information set.

In some embodiments, a spatial information field contained in the third information is associated with an operating mode during communication between a first device and the third device, and a parameter in the spatial information field indicates the spatial information.

In some embodiments, in the case where the operating mode during the communication between the first device and the third device includes that the first device sends second information to the third device via the one or more second devices and/or the first device receives the second information sent by the third device via the one or more second devices, the third information contains a first spatial information field, where the first spatial information field indicates a beam direction corresponding to the one or more second devices.

In some embodiments, in the case where the operating mode during the communication between the first device and the third device includes that the first device sends second information to the third device and/or the first device receives the second information sent by the third device, the third information contains a second information field, where the second spatial information field indicates a beam direction corresponding to the third device.

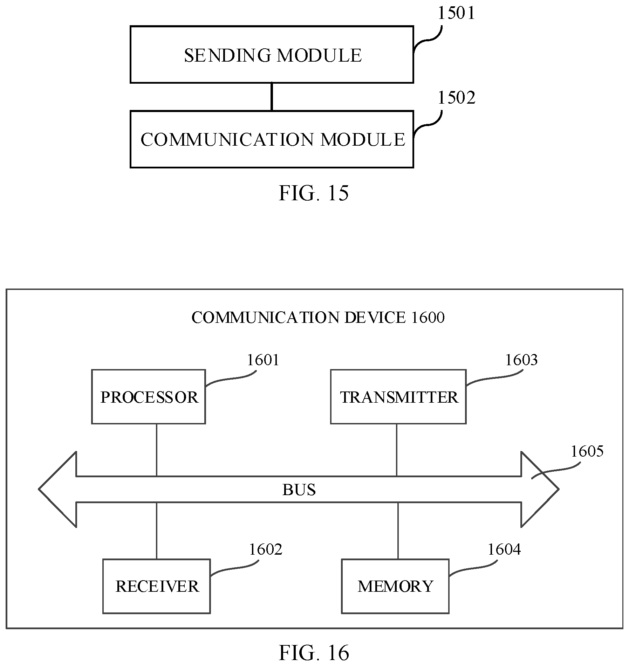

Reference may be made to FIG. 15, which illustrates a block diagram of a communication apparatus provided in an embodiment of the present disclosure. The communication apparatus has the function of implementing the method performed by the third device in any of the methods as illustrated in FIG. 5, FIG. 6, or FIG. 8. As illustrated in FIG. 15, the apparatus may include a sending module 1501 and communication module 1502. The sending module 1501 is configured to send first information to a first device, where the first information indicates one or more second devices, and the one or more second devices are RIS devices. The communication module 1502 is configured to communicate with the first device via the one or more second devices.

In some embodiments, the first information indicates one or more of: a parameter configuration of the second device; and an operating mode during communication between a first device and the third device.

In some embodiments, the parameter configuration of the second device includes one or more of the following information: type indication information of the second device, indicating a device type of the second device; identification information of the second device; activation indication information of the second device, indicating whether the second device is activated; application time indication information of the second device, indicating a time at which the second device is applied; and the number of the one or more second devices.

In some embodiments, the type indication information is associated with one or more of the following information: a beam direction of a reflected signal or a refracted signal from the second device; a beamforming mode of the reflected signal or the refracted signal from the second device; a polarization mode of the reflected signal or the refracted signal from the second device; and a phase of each RIS unit in the second device.

In some embodiments, the type indication information includes a type adjustment pattern of the second device, where the type adjustment pattern indicates a device type of the second device in each of one or more time units.

In some embodiments, the time unit is a slot, a radio frame, a symbol, a mini-slot, or an absolute time period.

In some embodiments, the identification information of the second device includes an index of the second device.

In some embodiments, the application time indication information of the second device includes one or more of: a configuration period of the second device; and an application time period of the second device.

In some embodiments, the operating mode includes one or more of the following. The first device sends second information to the third device. The first device sends the second information to the third device via the one or more second devices. The first device sends the second information to the third device via the one or more second devices, and the first device directly sends the second information to the third device. The first device receives the second information sent by the third device. The first device receives the second information sent by the third device via the one or more second devices. The first device receives the second information sent by the third device via the one or more second devices, and the first device directly receives the second information sent by the third device.

In some embodiments, the second information includes one or more of: control information, data, and a reference signal.

In some embodiments, the first information is carried in one or more of the following information: an SIB, RRC signaling, MAC signaling, and DCI signaling.

In some embodiments, the sending module is further configured to send third information to the first device, where the third information indicates one or more spatial information, the one or more spatial information indicates a beam direction, and the one or more spatial information is used by the first device to perform reception or transmission in a beam direction corresponding to the one or more second devices, to implement communication with the third device.

In some embodiments, a spatial information set to which the one or more spatial information belongs is associated with the first information.

In some embodiments, the spatial information set to which the one or more spatial information belongs is associated with the type indication information of the second device contained in the first information.

In some embodiments, the spatial information includes one or more of the following information: a TCI state, a unified TCI state, a beam direction, a beam index, a DL spatial relation filter, a UL spatial relation filter, a reference signal resource, and a QCL relation.

In some embodiments, spatial information in a spatial information set associated with different type indication information is not completely the same.

In some embodiments, in the case where the first information indicates multiple second devices, spatial information sets associated with type indication information of the multiple second devices are subsets of a same spatial information set.

In some embodiments, a spatial information field contained in the third information is associated with an operating mode during communication between a first device and the third device, and a parameter in the spatial information field indicates the spatial information.

In some embodiments, in the case where the operating mode during the communication between the first device and the third device includes that the first device sends second information to the third device via the one or more second devices and/or the first device receives the second information sent by the third device via the one or more second devices, the third information contains a first spatial information field, where the first spatial information field indicates a beam direction corresponding to the one or more second devices.

In some embodiments, in the case where the operating mode during the communication between the first device and the third device includes that the first device sends second information to the third device and/or the first device receives the second information sent by the third device, the third information contains a second information field, where the second spatial information field indicates a beam direction corresponding to the third device.

It may be noted that, when the apparatus provided in the foregoing embodiments implements its functions, only the division into the above functional modules is taken an example for illustration. In practice, the above functions can be allocated to different functional modules according to actual needs, that is, the structure of the device is divided into different functional modules to complete all or some of the functions described above.

Regarding the apparatus in the foregoing embodiments, the manner in which each module performs operations has been described in detail in the related method embodiments and thus will not be elaborated again herein.

Reference may be made to FIG. 16, which illustrates a schematic structural diagram of a communication device 1600 provided in an embodiment of the present disclosure. The communication device 1600 may include: a processor 1601, a receiver 1602, a transmitter 1603, a memory 1604, and a bus 1605.

The processor 1601 includes one or more processing cores. The processor 1601 performs various functional applications and information processing by running software programs and modules.

The receiver 1602 and the transmitter 1603 may be implemented as a communication assembly. The communication assembly may be a communication chip. The communication chip may also be referred to as a transceiver. The memory 1604 is connected with the processor 1601 via the bus 1605. The memory 1604 may be configured to store a computer program, and the processor 1601 is configured to execute the computer program to implement various steps in foregoing method embodiments.

In addition, the memory 1604 may be implemented by any type of volatile or nonvolatile storage devices or combinations thereof. The volatile or non-volatile storage devices include, but are not limited to: a magnetic disk or an optical disk, an electrically erasable programmable read-only memory (EEPROM), an erasable PROM (EPROM), a static random-access memory (SRAM), a read only memory (ROM), a magnetic memory, a flash memory, and a programmable ROM (PROM).

In an exemplary solution, when the communication device 1600 is implemented as the first device, the receiver 1602 and the processor 1601 execute the computer program, to cause the communication device to implement the various steps performed by the first device in any of the methods as illustrated in FIG. 5, FIG. 6, or FIG. 8.

In an exemplary solution, when the communication device 1600 is implemented as the third device, the transmitter 1603 and the processor 1601 execute the computer program, to cause the communication device to implement the various steps performed by the third device in any of the methods as illustrated in FIG. 5, FIG. 6, or FIG. 8.

A computer-readable storage medium is further provided in embodiments of the present disclosure. The computer-readable storage medium is configured to store a computer program that is loaded and executed by a processor to implement all or part of the steps performed by the first device or the third device in any of the methods as illustrated in FIG. 5, FIG. 6, or FIG. 8.

A chip is further provided in the present disclosure. The chip includes an integrated circuit and firmware disposed in the integrated circuit. The chip is configured to execute in a communication device, to cause the communication device to implement all or part of the steps performed by the first device or the third device in any of the methods as illustrated in FIG. 5, FIG. 6, or FIG. 8.

A computer program product is further provided in the present disclosure. The computer program product or a computer program comprising computer instructions stored in a computer-readable storage medium. A processor of a communication device is configured to read the computer instructions from the computer-readable storage medium and execute the computer instructions, to cause the communication device to implement all or part of the steps performed by the first device or the third device in any of the methods as illustrated in FIG. 5, FIG. 6, or FIG. 8.

A computer program is further provided in the present disclosure. The computer program is executed by a processor of a communication device, to implement all or part of the steps performed by the first device or the third device in any of the methods as illustrated in FIG. 5, FIG. 6, or FIG. 8.

Those skilled in the art can appreciate that in one or more of the above examples, the functions described in embodiments of the present disclosure may be implemented by hardware, software, firmware, or any combination thereof. When implemented by software, the functions may be stored in a computer-readable medium or transmitted as one or more instructions or codes in the computer-readable medium. The computer-readable medium includes a computer storage medium and a communication medium, where the communication medium includes any medium that facilitates transfer of a computer program from one place to another, and the storage medium may be any available medium that can be accessed by a general-purpose computer or a special-purpose computer.

The foregoing elaborations are merely exemplary embodiments of the present disclosure, and are not intended for limiting the present disclosure. Any modification, equivalent replacement, and improvement made within the concept and principle of the present disclosure shall fall within the protection scope of the present disclosure.

## Claims

1. A communication method, performed by a first device and comprising:
receiving first information, wherein the first information indicates one or more second devices, and the one or more second devices are reconfigurable intelligent surface (RIS) devices;
and
communicating with a third device via the one or more second devices.

2. The method of claim 1, wherein the first information indicates one or more of:
a parameter configuration of the second device; and
an operating mode during communication between the first device and the third device.

3. The method of claim 2, wherein the parameter configuration of the second device comprises one or more of the following information:
type indication information of the second device, indicating a device type of the second device;
identification information of the second device;
activation indication information of the second device, indicating whether the second device is activated;
application time indication information of the second device, indicating a time at which the second device is applied; and
a number of the one or more second devices.

4. The method of claim 3, wherein the type indication information is associated with one or more of the following information:
a beam direction of a reflected signal or a refracted signal from the second device;
a beamforming mode of the reflected signal or the refracted signal from the second device;
a polarization mode of the reflected signal or the refracted signal from the second device;
and
a phase of each RIS unit in the second device.

5. The method of claim 3 or 4, wherein the type indication information comprises a type adjustment pattern of the second device, wherein the type adjustment pattern indicates a device type of the second device in each of one or more time units.

6. The method of claim 5, wherein the time unit is a slot, a radio frame, a symbol, a mini-slot, or an absolute time period.

7. The method of any one of claims 3 to 6, wherein the identification information of the second device comprises an index of the second device.

8. The method of claim 7, wherein the application time indication information of the second device comprises one or more of:
a configuration period of the second device; and an application time period of the second device.

9. The method of any one of claims 2 to 8, wherein the operating mode comprises one or more of the following:
the first device sends second information to the third device;
the first device sends the second information to the third device via the one or more second devices;
the first device sends the second information to the third device via the one or more second devices, and the first device sends the second information to the third device;
the first device receives the second information sent by the third device;
the first device receives the second information sent by the third device via the one or more second devices; and
the first device receives the second information sent by the third device via the one or more second devices, and the first device receives the second information sent by the third device.

10. The method of claim 9, wherein the second information comprises one or more of:
control information, data, and a reference signal.

11. The method of any one of claims 1 to 10, wherein the first information is carried in one or more of the following information:
a system information block (SIB), radio resource control (RRC) signaling, media access control (MAC) signaling, and downlink control information (DCI) signaling.

12. The method of any one of claims 1 to 11, further comprising:
receiving third information, wherein the third information indicates one or more spatial information, and the one or more spatial information indicates a beam direction;
wherein communicating with the third device via the one or more second devices comprises:
performing reception or transmission in a beam direction corresponding to the one or more second devices according to the one or more spatial information, to implement communication with the third device.

13. The method of claim 12, wherein a spatial information set to which the one or more spatial information belongs is associated with the first information.

14. The method of claim 13, wherein the spatial information set to which the one or more spatial information belongs is associated with the type indication information of the second device contained in the first information.

15. The method of claim 14, wherein the spatial information comprises one or more of the following information:
a transmission configuration indication (TCI) state, a unified TCI state, a beam direction, a beam index, a downlink (DL) spatial relation filter, an uplink (UL) spatial relation filter, a reference signal resource, and a quasi-co-location (QCL) relation.

16. The method of claim 15, wherein spatial information in a spatial information set associated with different type indication information is not completely the same.

17. The method of claim 15 or 16, wherein in a case where the first information indicates a plurality of second devices, spatial information sets associated with type indication information of the plurality of second devices are subsets of a same spatial information set.

18. The method of any one of claims 12 to 17, wherein a spatial information field contained in the third information is associated with an operating mode during communication between the first device and the third device, and a parameter in the spatial information field indicates the spatial information.

19. The method of claim 18, wherein in a case where the operating mode during the communication between the first device and the third device comprises that the first device sends second information to the third device via the one or more second devices and/or the first device receives the second information sent by the third device via the one or more second devices,
the third information contains a first spatial information field, wherein the first spatial information field indicates a beam direction corresponding to the one or more second devices.

20. The method of claim 18, wherein in a case where the operating mode during the communication between the first device and the third device comprises that the first device sends second information to the third device and/or the first device receives the second information sent by the third device,
the third information contains a second information field, wherein the second spatial information field indicates a beam direction corresponding to the third device.

21. A communication method, performed by a third device and comprising:
sending first information to a first device, wherein the first information indicates one or more second devices, and the one or more second devices are reconfigurable intelligent surface (RIS) devices; and
communicating with the first device via the one or more second devices.

22. The method of claim 21, wherein the first information indicates one or more of:
a parameter configuration of the second device; and an operating mode during communication between the first device and the third device.

23. The method of claim 22, wherein the parameter configuration of the second device comprises one or more of the following information:
type indication information of the second device, indicating a device type of the second device;
identification information of the second device;
activation indication information of the second device, indicating whether the second device is activated;
application time indication information of the second device, indicating a time at which the second device is applied; and
a number of the one or more second devices.

24. The method of claim 23, wherein the type indication information is associated with one or more of the following information:
a beam direction of a reflected signal or a refracted signal from the second device;
a beamforming mode of the reflected signal or the refracted signal from the second device;
a polarization mode of the reflected signal or the refracted signal from the second device;
and
a phase of each RIS unit in the second device.

25. The method of claim 23 or 24, wherein the type indication information comprises a type adjustment pattern of the second device, wherein the type adjustment pattern indicates a device type of the second device in each of one or more time units.

26. The method of claim 25, wherein the time unit is a slot, a radio frame, a symbol, a mini-slot, or an absolute time period.

27. The method of any one of claims 23 to 26, wherein the identification information of the second device comprises an index of the second device.

28. The method of claim 27, wherein the application time indication information of the second device comprises one or more of:
a configuration period of the second device; and an application time period of the second device.

29. The method of any one of claims 22 to 28, wherein the operating mode comprises one or more of the following:
the first device sends second information to the third device;
the first device sends the second information to the third device via the one or more second devices;
the first device sends the second information to the third device via the one or more second devices, and the first device sends the second information to the third device;
the first device receives the second information sent by the third device;
the first device receives the second information sent by the third device via the one or more second devices; and
the first device receives the second information sent by the third device via the one or more second devices, and the first device receives the second information sent by the third device.

30. The method of claim 29, wherein the second information comprises one or more of:
control information, data, and a reference signal.

31. The method of any one of claims 21 to 30, wherein the first information is carried in one or more of the following information:
a system information block (SIB), radio resource control (RRC) signaling, media access control (MAC) signaling, and downlink control information (DCI) signaling.

32. The method of any one of claims 21 to 31, further comprising:
sending third information to the first device, wherein the third information indicates one or more spatial information, the one or more spatial information indicates a beam direction, and the one or more spatial information is used by the first device to perform reception or transmission in a beam direction corresponding to the one or more second devices, to implement communication with the third device.

33. The method of claim 32, wherein a spatial information set to which the one or more spatial information belongs is associated with the first information.

34. The method of claim 33, wherein the spatial information set to which the one or more spatial information belongs is associated with the type indication information of the second device contained in the first information.

35. The method of claim 34, wherein the spatial information comprises one or more of the following information:
a transmission configuration indication (TCI) state, a unified TCI state, a beam direction, a beam index, a downlink (DL) spatial relation filter, an uplink (UL) spatial relation filter, a reference signal resource, and a quasi-co-location (QCL) relation.

36. The method of claim 35, wherein spatial information in a spatial information set associated with different type indication information is not completely the same.

37. The method of claim 35 or 36, wherein in a case where the first information indicates a plurality of second devices, spatial information sets associated with type indication information of the plurality of second devices are subsets of a same spatial information set.

38. The method of any one of claims 32 to 37, wherein a spatial information field contained in the third information is associated with an operating mode during communication between the first device and the third device, and a parameter in the spatial information field indicates the spatial information.

39. The method of claim 38, wherein in a case where the operating mode during the communication between the first device and the third device comprises that the first device sends second information to the third device via the one or more second devices and/or the first device receives the second information sent by the third device via the one or more second devices,
the third information contains a first spatial information field, wherein the first spatial information field indicates a beam direction corresponding to the one or more second devices.

40. The method of claim 38, wherein in a case where the operating mode during the communication between the first device and the third device comprises that the first device sends second information to the third device and/or the first device receives the second information sent by the third device,
the third information contains a second information field, wherein the second spatial information field indicates a beam direction corresponding to the third device.

41. A communication apparatus, comprising:
a receiving module configured to receive first information, wherein the first information indicates one or more second devices, and the one or more second devices are reconfigurable intelligent surface (RIS) devices; and
a communication module configured to communicate with a third device via the one or more second devices.

42. The apparatus of claim 41, wherein the first information indicates one or more of:
a parameter configuration of the second device; and
an operating mode during communication between a first device and the third device.

43. The apparatus of claim 42, wherein the parameter configuration of the second device comprises one or more of the following information:
type indication information of the second device, indicating a device type of the second device;
identification information of the second device;
activation indication information of the second device, indicating whether the second device is activated;
application time indication information of the second device, indicating a time at which the second device is applied; and
a number of the one or more second devices.

44. The apparatus of claim 43, wherein the type indication information is associated with one or more of the following information:
a beam direction of a reflected signal or a refracted signal from the second device;
a beamforming mode of the reflected signal or the refracted signal from the second device;
a polarization mode of the reflected signal or the refracted signal from the second device;
and
a phase of each RIS unit in the second device.

45. The apparatus of claim 43 or 44, wherein the type indication information comprises a type adjustment pattern of the second device, wherein the type adjustment pattern indicates a device type of the second device in each of one or more time units.

46. The apparatus of claim 45, wherein the time unit is a slot, a radio frame, a symbol, a mini-slot, or an absolute time period.

47. The apparatus of any one of claims 43 to 46, wherein the identification information of the second device comprises an index of the second device.

48. The apparatus of claim 47, wherein the application time indication information of the second device comprises one or more of:
a configuration period of the second device; and an application time period of the second device.

49. The apparatus of any one of claims 42 to 48, wherein the operating mode comprises one or more of the following:
the first device sends second information to the third device;
the first device sends the second information to the third device via the one or more second devices;
the first device sends the second information to the third device via the one or more second devices, and the first device sends the second information to the third device;
the first device receives the second information sent by the third device;
the first device receives the second information sent by the third device via the one or more second devices; and
the first device receives the second information sent by the third device via the one or more second devices, and the first device receives the second information sent by the third device.

50. The apparatus of claim 49, wherein the second information comprises one or more of:
control information, data, and a reference signal.

51. The apparatus of any one of claims 41 to 50, wherein the first information is carried in one or more of the following information:
a system information block (SIB), radio resource control (RRC) signaling, media access control (MAC) signaling, and downlink control information (DCI) signaling.

52. The apparatus of any one of claims 41 to 51, wherein
the receiving module is further configured to receive third information, wherein the third information indicates one or more spatial information, and the one or more spatial information indicates a beam direction; and
the communication module is configured to perform reception or transmission in a beam direction corresponding to the one or more second devices according to the one or more spatial information, to implement communication with the third device.

53. The apparatus of claim 52, wherein a spatial information set to which the one or more spatial information belongs is associated with the first information.

54. The apparatus of claim 53, wherein the spatial information set to which the one or more spatial information belongs is associated with the type indication information of the second device contained in the first information.

55. The apparatus of claim 54, wherein the spatial information comprises one or more of the following information:
a transmission configuration indication (TCI) state, a unified TCI state, a beam direction, a beam index, a downlink (DL) spatial relation filter, an uplink (UL) spatial relation filter, a reference signal resource, and a quasi-co-location (QCL) relation.

56. The apparatus of claim 55, wherein spatial information in a spatial information set associated with different type indication information is not completely the same.

57. The apparatus of claim 55 or 56, wherein in a case where the first information indicates a plurality of second devices, spatial information sets associated with type indication information of the plurality of second devices are subsets of a same spatial information set.

58. The apparatus of any one of claims 52 to 57, wherein a spatial information field contained in the third information is associated with an operating mode during communication between a first device and the third device, and a parameter in the spatial information field indicates the spatial information.

59. The apparatus of claim 58, wherein, wherein in a case where the operating mode during the communication between the first device and the third device comprises that the first device sends second information to the third device via the one or more second devices and/or the first device receives the second information sent by the third device via the one or more second devices,
the third information contains a first spatial information field, wherein the first spatial information field indicates a beam direction corresponding to the one or more second devices.

60. The apparatus of claim 58, wherein in a case where the operating mode during the communication between the first device and the third device comprises that the first device sends second information to the third device and/or the first device receives the second information sent by the third device,
the third information contains a second information field, wherein the second spatial information field indicates a beam direction corresponding to the third device.

61. A communication apparatus, comprising:
a sending module configured to send first information to a first device, wherein the first information indicates one or more second devices, and the one or more second devices are reconfigurable intelligent surface (RIS) devices; and
a communication module configured to communicate with the first device via the one or more second devices.

62. The apparatus of claim 61, wherein the first information indicates one or more of:
a parameter configuration of the second device; and
an operating mode during communication between the first device and a third device.

63. The apparatus of claim 62, wherein the parameter configuration of the second device comprises one or more of the following information:
type indication information of the second device, indicating a device type of the second device;
identification information of the second device;
activation indication information of the second device, indicating whether the second device is activated;
application time indication information of the second device, indicating a time at which the second device is applied; and
a number of the one or more second devices.

64. The apparatus of claim 63, wherein the type indication information is associated with one or more of the following information:
a beam direction of a reflected signal or a refracted signal from the second device;
a beamforming mode of the reflected signal or the refracted signal from the second device;
a polarization mode of the reflected signal or the refracted signal from the second device;
and
a phase of each RIS unit in the second device.

65. The apparatus of claim 63 or 64, wherein the type indication information comprises a type adjustment pattern of the second device, wherein the type adjustment pattern indicates a device type of the second device in each of one or more time units.

66. The apparatus of claim 65, wherein the time unit is a slot, a radio frame, a symbol, a mini-slot, or an absolute time period.

67. The apparatus of any one of claims 63 to 66, wherein the identification information of the second device comprises an index of the second device.

68. The apparatus of claim 67, wherein the application time indication information of the second device comprises one or more of:
a configuration period of the second device; and an application time period of the second device.

69. The apparatus of any one of claims 62 to 68, wherein the operating mode comprises one or more of the following:
the first device sends second information to the third device;
the first device sends the second information to the third device via the one or more second devices;
the first device sends the second information to the third device via the one or more second devices, and the first device sends the second information to the third device;
the first device receives the second information sent by the third device;
the first device receives the second information sent by the third device via the one or more second devices; and
the first device receives the second information sent by the third device via the one or more second devices, and the first device receives the second information sent by the third device.

70. The apparatus of claim 69, wherein the second information comprises one or more of:
control information, data, and a reference signal.

71. The apparatus of any one of claims 61 to 70, wherein the first information is carried in one or more of the following information:
a system information block (SIB), radio resource control (RRC) signaling, media access control (MAC) signaling, and downlink control information (DCI) signaling.

72. The apparatus of any one of claims 61 to 71, wherein
the sending module is further configured to send third information to the first device, wherein the third information indicates one or more spatial information, the one or more spatial information indicates a beam direction, and the one or more spatial information is used by the first device to perform reception or transmission in a beam direction corresponding to the one or more second devices, to implement communication with a third device.

73. The apparatus of claim 72, wherein a spatial information set to which the one or more spatial information belongs is associated with the first information.

74. The apparatus of claim 73, wherein the spatial information set to which the one or more spatial information belongs is associated with the type indication information of the second device contained in the first information.

75. The apparatus of claim 74, wherein the spatial information comprises one or more of the following information:
a transmission configuration indication (TCI) state, a unified TCI state, a beam direction, a beam index, a downlink (DL) spatial relation filter, an uplink (UL) spatial relation filter, a reference signal resource, and a quasi-co-location (QCL) relation.

76. The apparatus of claim 75, wherein spatial information in a spatial information set associated with different type indication information is not completely the same.

77. The apparatus of claim 75 or 76, wherein in a case where the first information indicates a plurality of second devices, spatial information sets associated with type indication information of the plurality of second devices are subsets of a same spatial information set.

78. The apparatus of any one of claims 72 to 77, wherein a spatial information field contained in the third information is associated with an operating mode during communication between the first device and the third device, and a parameter in the spatial information field indicates the spatial information.

79. The apparatus of claim 78, wherein in a case where the operating mode during the communication between the first device and the third device comprises that the first device sends second information to the third device via the one or more second devices and/or the first device receives the second information sent by the third device via the one or more second devices,
the third information contains a first spatial information field, wherein the first spatial information field indicates a beam direction corresponding to the one or more second devices.

80. The apparatus of claim 78, wherein in a case where the operating mode during the communication between the first device and the third device comprises that the first device sends second information to the third device and/or the first device receives the second information sent by the third device,
the third information contains a second information field, wherein the second spatial information field indicates a beam direction corresponding to the third device.

81. A communication device, comprising:
a transceiver;
a memory configured to store a computer program; and
a processor configured to execute the computer program, to cause the network device to implement the communication method of any one of claims 1 to 40.

82. A computer-readable storage medium configured to store a computer program that is executed by a processor of a communication device, to cause the communication device to implement the communication method of any one of claims 1 to 40.

83. A chip, comprising an integrated circuit and firmware disposed in the integrated circuit, wherein the chip is configured to execute in a communication device, to cause the communication device to perform the communication method of any one of claims 1 to 40.

84. A computer program product comprising computer instructions stored in a computer-readable storage medium, and a processor of a communication device being configured to read the computer instructions from the computer-readable storage medium and execute the computer instructions, to cause the communication device to perform the communication method of any one of claims 1 to 40.

85. A computer program being executed by a processor of a communication device, to cause the communication device to implement the communication method of any one of claims 1 to 40.
